# NEW EUROPEAN PATENT SPECIFICATION

(11) **EP 1 218 472 B2**
(45) Date of publication and mention of the opposition decision: **23.11.2011**
(45) Mention of the grant of the patent: 30.11.2005
(21) Application number: 00963201.9
(22) Date of filing: 06.09.2000
(51) Int. Cl.: C10L 1/02, C10L 1/18

(54) **MOTOR FUEL FOR DIESEL, GAS-TURBINE AND TURBOJET ENGINES, COMPRISING AT LEAST FOUR DIFFERENT OXYGEN-CONTAINING FUNCTIONAL GROUPS SELECTED FROM ALCOHOL, ETHER, ALDEHYDE, KETONE, ESTER, INORGANIC ESTER, ACETAL, EPOXIDE AND PEROXIDE**
TREIBSTOFF FÜR DIESEL-, GASTURBINEN- UND TURBOEINSPRITZMOTOREN MIT MINDESTENS VIER VERSCHIEDENEN SAUERSTOFF ENTHALTENDEN FUNKTIONELLEN GRUPPEN WIE ALKOHOLE, ETHER, ALDEHYDE, KETONE, ESTER, ANORGANISCHE ESTER, AZETATE, EPOXIDE UND PEROXIDE
CARBURANT POUR MOTEURS DIESEL, TURBINES A GAZ ET TURBOREACTEURS COMPRENANT AU MOINS QUATRE GROUPES FONCTIONNELS DIFFERENTS CONTENANT DE L'OXYGENE CHOISIS PARMI LES ALCOOLS, ETHERS, ALDEHYDES, CETONES, ESTERS, ESTERS INORGANIQUES, ACETALS, EPOXYDES ET PEROXYDES

(30) Priority: 06.09.1999 WO PCT/SE99/01546
(43) Date of publication of application: 03.07.2002
(73) Proprietor: Bio Petroleum Ltd, London W1Y 9DD (GB)
(72) Inventor: HULL Angelica, S-181 31 Lidingö (SE); GOLUBKOV, Igor, S-181 31 Lidingö (SE)
(74) Representative: Halldin, Bo
(86) International application number: PCT/SE2000/001717
(87) International publication number: WO 2001/018155

(56) References cited:
- EP-A2- 0 121 089
- WO-A1-00/31216
- WO-A1-95/02654
- FR-A1- 2 498 622
- US-A- 4 356 001

## Description

### Field of the Invention

The present invention relates to motor fuel for diesel, gas-turbine, and turbojet engines, and especially for standard engines, which motor fuel includes fuel compositions of organic compounds containing bound oxygen, and, optionally, also hydrocarbon compounds. Additionally, this invention relates to motor fuel for such engines, and especially diesel engines, in which the fuel composition constitutes a stable, homogeneous liquid at a pressure and an ambient temperature, being normal operational conditions of said engines.

### Background to the Invention

The problem of the reduction of pollutants in the exhaust emissions of diesel-driven engines is a challenge to modern society. It is proposed to replace diesel oil as a fuel for vehicles, as represented by, for example, EN 590 and No. 2 diesel oil, and the like, because of environmental reasons and also due to its effects on health. There are international agreements providing for the progressive tightening of the requirements concerning the amount of toxic products resulting from the combustion of motor fuel in the exhaust emissions of vehicles and other machines using diesel engines. In the European Union countries and in the USA the requirements of Step II come into force starting from year 2002. The requirements stipulate significant decreases of carbon monoxide (CO), mixtures of hydrocarbons and nitrogen oxides (HC+NOₓ), and particles in the exhaust emissions of diesel engines.

Moreover, modern society is preoccupied with the damage to the global balance of carbon dioxide in the atmosphere, which is linked to the intensive burning of petroleum products, coal and fossil gas. The damage to the carbon dioxide balance in the atmosphere causes global climate warming and has a negative influence on the nature of our planet.

In this connection the development of motor fuel for engines obtained from renewable plant resources is of real significance.

The growing concern for the protection of the environment and for stricter standards in the content of harmful components in exhaust emissions forces industry to develop urgently various alternative fuels which burn more cleanly.

The existing global inventory of vehicles and machinery with standard diesel, gas-turbine and turbojet engines does not currently allow the complete elimination of, as a motor fuel, hydrocarbon mixtures obtained from mineral resources, such as from crude oil, coal and natural gas, an example of such a hydrocarbon mixture being diesel oil.

On the other hand it is possible to replace a portion of hydrocarbons in motor fuel, such as diesel oil, with other organic compounds which provide cleaner emission exhaust and do not adversely affect engine performance. Gasolines comprising oxygen-containing compounds are presently widely used. It is also known, for instance, that the replacement in motor fuel of 15% of the diesel oil by alcohol provides cleaner exhaust and provides acceptable power without modification of existing diesel engines.

However, the problem of using the most widely available and inexpensive alcohols, methanol and ethanol, as a portion of a motor fuel is that these compounds are immiscible with diesel and gasoil fuels. Potentially, alcohols and other oxygen containing compounds should yield environmentally clean products of combustion. However, the combustion process in engines is an extremely complicated phenomenon, which is affected not only by the composition of the fuel, but also by the physical parameters of the fuel, and, initially by the homogeneity of the liquid.

The feasibility and properties of mixtures of petroleum diesel fraction with ethanol was reported long ago, such as in Technical Feasibility of Diesohol, ASAE Paper 79-1052, 1979. It was stressed in that article that the main problem of the use of such a fuel is its tendency for phase separation. Furthermore, such phase separation is significantly affected by the presence of water in the system. At 0°C a water content of only 0.05% causes separation of motor fuel consisting of 99% diesel and 0.95% ethanol.

It is widely known that NOₓ emission can be reduced by reducing the combustion temperature. One way of achieving reduced combustion temperature is by adding water to the fuel or separately injecting water in the combustion chamber.

However, by adding water phase separation will occur in most fuel systems, especially at lower temperatures, i.e., e.g. below 0°C. EP-A-0 014 992 (BASF) and US Patent 4,356,001 (to W. M. Sweeney) addresses the problem of water in the fuel composition by including in the fuel polyethers and/or acetals with or without methanol or ethanol. However, when formulating fuel compositions according to the patent one will find that the improved water tolerances are not sufficient in a wider temperature range. The emissions of CO, hydrocarbons and soot from such fuels are remarkably higher than acceptable.

It is known that alcohol-containing fuels provide relatively low emissions of carbon, carbon oxide and nitrogen oxide (Johnson R.T., Stoffer J.O., Soc. Automot. Eng. (Spec. Publ.) 1983, S.P. 542, 91-104).

A significant part of the developments in the field of hybrid diesel fuels is dedicated to the creation of microemulsions. Microemulsions are thermally stable colloid dispersions in which the particle diameter is on the order of 20-30 A. In 1977 Backer proposed employing surfactants to form microemulsions of alcohols and hydrocarbons (GB Patent No. 2,002,400, granted July 12, 1977). Later, for the same purposes other emulgators were proposed (GB Patent No. 2,115,002, granted February 1, 1982; U.S. Patent No. 4,509,950, issued March 24, 1985; U.S. Patent No. 4,451,265, issued April 21, 1984; and European Patent No. 475,620, published March 18, 1992.

It is possible to achieve a homogeneous composition of diesel fuel incorporating different alcohols and their mixtures. In the French Patent No. 2453210 published October 31, 1980, in order to achieve a homogeneous liquid incorporating hydrocarbons and methanol, it is proposed to add also primary aliphatic saturated alcohols of linear and branched structures having from 8 to 15 carbon atoms or mixtures of such alcohols. The avoidance of the separation of the hybrid fuel incorporating the alcohol mixture allows the development covered by the European Patent No. 319060, published June 7, 1989.

The study of the performance characteristics of the hybrid fuels confirms the possibility of their use for the operation of diesel engines (Mathur H.B., Babu M.K. Indian Inst. Techn. Journ. Therm. Eng., 1988, 2(3), p. 63-72. Haschimoto, K., et al., Journ. Jap. Petrol. Inst., 1996, v. 39, N2, p. 166-169).

In WO95/02654 (published January 26, 1995), in order to achieve a homogeneous fuel blend the patentees propose using a formulation containing up to 20% of the total volume of ethanol and/or n-propanol, up to 15% of the total volume of fatty acid and/or organic ester, and the remainder a hydrocarbon liquid. The patent provides examples of compositions in which oleic acid as well as different organic esters are used in addition to diesel, ethanol and propanol.

In accordance with WO95/02654 all the Examples are said to illustrate fuel compositions having a single phase. This is said to demonstrate the effectiveness of using certain amounts of fatty acids and/or organic esters, as well as their mixtures, in order to obtain homogeneous liquids incorporating diesel and low alkyl alcohols in addition to those mentioned above. However, the patent does not any state temperature limits of stability of the obtained fuel formulations, and is silent as to how the presence of any water affects their stability. On the other hand, it is known that stability of mixtures of lower alcohols and diesel is one of the main operational properties of such fuels. It is stated in WO95/02654 that tests of several compositions in various standard diesel engines did not show a decrease of power and efficiency of the fuel. However, nothing is said regarding the content of the exhaust emissions of different engines using the fuel formulations proposed. The only comment in that regard is that the use of the ethanol blend over several months in the engine of a Yale Forklift (model GDP 050 RUAS) Mazda XA was likely to be more acceptable with regard to the condition of the air inside the warehouse where the forklift was operated.

WO 00/31 216 describes a splash-blendable solubilised diesel fuel composition including diesel fuel, ethanol, a stabilizing additive and, optionally, an alkyl ester of a fatty acid and/or a co-solvent, the stabilizing additive being either a mixture of fatty acid alcohols, a polymeric material, or a combination of the mixture and the polymeric material.

### Summary of the Invention

The drawbacks mentioned of the fuel compositions of the prior art is eliminated by providing a fuel composition of the present invention as specified in claim 1.

The composition thus obtained will form a homogeneous liquid fuel tolerant to the presence of water over a wide range of temperatures. Employing the inventive motor fuel as a replacement of a ordinary motor fuel for operating a standard engine demonstrates considerable reduction of pollutants in the exhaust emissions, including emissions of NOₓ, and particles. Moreover, the use of components obtained from renewable raw material reduces emission into the atmosphere of the excess carbon dioxide.

According to the invention a fuel is provided that can be used in existing, standard engines, including diesel engines, advantageously without any changes in fuel injection synchronisation, valve timing and valve opening time. It is thus possible to switch between conventional fuels and fuels according to the present invention without any engine modification. Such a property is of great practical value.

Contrary to a large number of fuel compositions of the prior art which have been used to replace diesel fuel in part or totally, especially such compositions containing carboxylic acids, the fuel of the present invention is essentially noncorrosive.

A further advantage of the present invention is that, due to the flexibility of the composition of the fuel, it is possible to adapt the same so as to take advantage of the current prices at a given time of the specific constituents, or even replace any constituents in order to produce a cheaper fuel, if desired. It is, for example, possible to let the price and availability of any hydrocarbons used govern the contents of the fuel compositions.

Most advantageously, the method of preparing the fuel of the present invention does not require any vigorous mixing of the constituents, such as in the prior art.

Thus, no intensive stirring of the mixture is required in order to obtain a homogeneous fuel composition of the present invention.

Thus, according to the present invention a homogeneous fuel composition providing efficient operation of diesel, gas-turbine and turbojet engines, including standard engines and reduced emission of pollutants in the exhaust emission is obtained by employing oxygen-containing compounds comprising at least four oxygen-containing functional groups, wherein said groups are contributed to by four different oxygen-containing compounds, each of which contains at least one of said groups, by employing at least four types of organic compounds differing in functional groups containing bound oxygen.

This invention is based, inter alia, on employing as a motor fuel the above-mentioned combination of organic compounds containing bound oxygen, with or without hydrocarbons, forming a homogeneous liquid at ambient temperature and ordinary pressure in the environment wherein the engine is operated. When used as a motor fuel the above-mentioned combination of the organic compounds containing bound oxygen, and optionally, hydrocarbons, provides the required operational characteristics of said engines, and a surprisingly reduced amount of pollutants in the exhaust emissions.

It has surprisingly been found that, if brought to temperatures below the cloud point or to temperatures above the starting boiling point, so that a phase separation will occur, the inventive fuel compositions subsequently, when allowed to return to temperatures within the temperature range between the cloud point and the initial boiling point of the specific fuel composition, will re-homogenise.

According to the invention a motor fuel comprises at least four different oxygen-containing functional groups contained in at least four organic compounds, wherein the oxygen can be bound in any of the following functional groups: 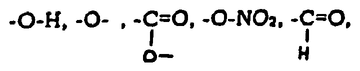 and, optionally, hydrocarbon compounds.

The inventive motor fuel composition for diesel, turbojet and jet engines, including standard engines, has reduced emission of pollutants and comprises an oxygen-containing organic component containing an alcohol, an ether, an ester and at least one of an aldehyde, a ketone, an inorganic acid ester, an acetal, an epoxide, and peroxide, and, optionally a hydrocarbon component.

### DETAILED DESCRIPTION OF THE INVENTION

In general, the oxygen-containing organic compound component is present in amounts from about 5% to 100% based on the total volume of the motor fuel composition and, when present, the hydrocarbon component is employed in amounts from 0 to about 95%, based on the total volume of the motor fuel composition.

In general, the motor fuel composition is preferably stable at atmospheric pressure over a temperature range from a cloud temperature of as low as about -35°C to an initial boiling temperature of about 180°C.

The preferred homogeneous motor fuel composition has a cloud point not higher than about -50°C and an initial boiling point not lower than about 50°C.

The motor fuel composition exhibits all of the following properties:
(i) density at 20°C of not less than 0.775 g/cm³;
(ii) the cloud temperature is not higher than 0°C at atmospheric pressure;
(iii) stable at atmospheric pressure from cloud temperature of 0°C to initial boiling point of 50°C;
(iv) amounts of liquid evaporated by boiling at atmospheric pressure;
   - not more than 25% of the total volume of the motor fuel composition distills no higher than 100°C;
   - not more than 35% of the total volume of the motor fuel composition distills at temperatures no higher than 150°C;
   - not more than 50% of the total volume of the motor fuel composition distills at temperatures no higher than 200°C;
   - not less than 98% of the total volume of the motor fuel composition distills at temperatures no higher than 400 °C, suitably no higher than 370°C; and preferably no higher than 280°C;
(v) heat of combusion on oxidation by oxygen of not less than 39 MJ/kg;
(vi) self-ignition temperature from 150°C to 300°C.
(vii) ability to accommodate at least 1% water by volume.

The motor fuel composition is preferably produced by successively introducing into a fuel reservoir at the same temperature, the components of the motor fuel composition beginning with the component having the least density at that temperature and terminating with the component having the highest density at that temperature.

A heavier hydrocarbon fraction is typically employed in combination with the oxygen-containing components. The hydrocarbon fraction employed is generally any hydrocarbon mixture, such as a petroleum fraction, meeting ASTM specifications for diesel fuel. Depending on grade, actual hydrocarbon fractions will vary. No. 2 diesel fuel, having its European counterpart in EN 590 diesel fuel, is most commonly used in commercial and agricultural vehicles and increasingly, in private vehicles. Of course other hydrocarbon fractions lighter than the diesel fraction, including kerosene, as well as fractions heavier than the diesel fraction, including gas oil and fuel oil, could be used in the present motor fuel, to replace the diesel fraction.

The hydrocarbon component of the instant motor fuel composition, when employed, is preferably a diesel fraction. The diesel fraction is preferably a mixture of a diesel oil and the hydrocarbon fraction lighter than the diesel oil. It is also possible to employ a hydrocarbon liquid obtained from a renewable raw material as a component of the motor fuel for diesel engines. It is preferred to employ the hydrocarbon liquids obtained from turpentine or rosin, as well as hydrocarbon liquids produced by processing of oxygen containing compounds.

The hydrocarbon component of the motor fuel for diesel engines, when employed, can be produced from synthesis-gas, or natural gas and coal.

Preferably, at least one of methanol or ethanol, and, optionally, products derived from said methanol and/or ethanol, are present in the oxygen-containing compound component. The components of the motor fuel may contain contaminants, which reduce the time and expense in processing the components for use in the fuel.

Amounts in the order of 1% water based on the total volume of the motor fuel composition may be present without significantly undesirably affecting the properties and homogeneity of the motor fuel compositions. Accordingly, components and hydrocarbon fractions commercially available containing water need not necessarily be treated to remove water prior to incorporation in the motor fuel.

It is also a preferred feature of the invention that the oxygen containing organic compound component is employed from a renewable plant resource.

According to a preferred embodiment of the invention, for a fuel composition providing a shorter period of delay in the ignition of the motor fuel, the organic compounds containing bound oxygen preferably have a linear or sparsely branched molecular structure.

According to another preferred embodiment of the invention, for a fuel composition containing organic compounds containing bound oxygen with a branched molecular structure in order that the efficiency of operation is not reduced, the temperature of self-ignition of the motor fuel composition is between about 150°C and 300°C.

In accordance with a further preferred embodiment of the invention a fuel composition is provided for efficient operation of engines and exhibiting reduction of pollutants in the exhaust emissions, without the addition of hydrocarbons. For this purpose, only the organic compounds containing bound oxygen are employed.

The instant motor fuel composition can be utilised under conditions of either reduced and/or increased ambient temperature with satisfactory efficiency in operation.

In accordance with a further preferred embodiment of the invention an oxygen containing components provide the required lubrication properties of the motor fuel, which is of particular importance for proper operation of diesel engine.

According to another preferred embodiment of the invention an oxygen containing components provide reduction of deposit in the combustion chamber of the engine.

The oxygen-containing component of the motor fuel of the invention consists of oxygen-containing organic compounds altogether exhibiting at least four different oxygen-containing functional groups, said groups being (i) alcohol, (ii) ether, (iii) organic ester and (iv) at least one of aldehyde, ketone, inorganic acid ester, acetal, epoxide, and peroxide, according to claim 1.

The fuel composition of the invention comprises at least one compound of each of the different classes included in (i) to (iv) above.

Mixtures of alcohols, such as (i) ethanol and butanol, (ii) ethanol, propanal and hexanol, (iii) methanol and ethanol, (iv) ethanol, butanol and hexanol and (v) ethanol, propanol, butanol, pentanol, ethyl-hexanol, and trimethylnonanole and the like may preferably be employed as the alcohol component. Further, mixtures of ethers, and mixtures of organic esters may also be utilised for the ethers or organic ester component, respectively, with satisfactory results. Likewise, mixtures of any of each of acetals, epoxides, peroxides, aldehydes, ketones and inorganic acid esters may be employed for such components.

When three or fewer different classes of oxygen-containing components are employed to form the instant motor fuel composition for diesel engines it has been found that it is difficult to readily form a homogeneous, single phase fuel. For example, when diesel oil is combined with ethanol, oleic acid and isopropyl oleate as in Composition 10 of WO95/02654 by adding to diesel oil ethanol, oleic acid and isopropyl oleate, and the mixture is permitted to stand for an hour, a multi-phase composition is generally observed. Only with substantial shaking does the phase separation disappear. To the contrary, in the present invention where four different classes of oxygen-containing compounds are employed and the components are mixed in order of increasing density and the mixture allowed to stand for at least about an hour, a single phase mixture is obtained without the need for external mixing.

The oxygen-containing compound includes an alcohol. In general, aliphatic alcohols, preferably alkanols, and mixtures thereof are employed. More preferably, alkanols of the general formula: R-OH, in which R is alkyl with 1 to 10 carbon atoms, most preferably 2 to 8 carbon atoms, such as ethanol, n-, iso- or sec-butyl, or amyl alcohol, 2-ethylhexanol, or 2,6,8-trimethyl-4-nonanole are employed.

The fuel additive can include an aldehyde of the general formula 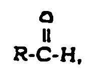 where R is a C₁-C₈. hydrocarbon.

Preferred aldehydes include formaldehyde, ethylaldehyde, butylaldehyde, isobutylaldehyde and ethylhexylaldehyde.

The fuel additive can include a ketone of the general formula 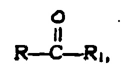 wherein R and R₁ each are a C₁ - C₈ hydrocarbon residue, the same or different or, together, form a cyclic ring, the total number of carbon atoms of R and R₁ being 3 to 12. The preferred ketones of the invention include diisobutyl ketone, ethylamyl ketone, carvon, and menthone.

The ether fuel additive includes a monoether, a diether and/or a cycloether. A preferred ether has the general formula R-O-R', wherein R and R' are the same or different and are each a C₂-C₁₀ hydrocarbon group or, together, form a cyclic ring. In general, lower (C₄-C₈,) dialkyl ethers are preferred.

The total number of carbon atoms in the ether is preferably from 8 to 16.

Typical monoethers include dibutyl ether, tert-butyl isobutyl ether, ethylbutyl ether, diisoamyl ether, dihexyl ether and diisooctyl ether. Diethers are dimethoxy propane and diethoxy propane. Typical cycloethers include cyclic mono, di, and heterocyclic ethers as dioxane, methyl tetrahydrofuran, methyl tetrahydropyran, and tetrahydrofurfuryl alcohol.

The ester additive is an ester of an organic acid of the general formula 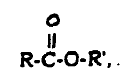 where R and R' are the same or different. The esters are C₁-C₈ alkyl esters of C₁-C₂₂ saturated or unsaturated fatty acids. Typical esters include ethyl formate, methyl acetate, ethyl acetate, propyl acetate, isobutyl acetate, butyl acetate, isoamyl acetate, octyl acetate, isoamyl propionate, methyl butyrate, ethyl butyrate, butylbutyrate, ethyl oleate, ethyl caprylate, rape seed oil methyl ester, isobornylmethacrylate and the like.

The acetal fuel additive has the general formula:

RCH(OR')₂

wherein R is hydrogen or hydrocarbyl, preferably lower alkyl, i.e. (C₁-C₃) and R' is C₁-C₄ alkyl, such as methyl, ethyl or butyl. Typical acetals include formaldehyde dimethyl acetal, formaldehyde diethyl acetal, acetaldehyde diethyl acetal and acetaldehyde dibutyl acetal.

The inorganic acid ester is selected from cyclohexyl nitrate, isopropyl nitrate, n-amyl nitrate, 2-ethylhexyl nitrate, and iso-amyl nitrate.

The oxygen containing compound can be an organic peroxide. The organic peroxides are of the formula R-O-O-R' where R and R' are each the same or different and are alkyl or oxygen-substituted alkyl, such as alkanoic. Examples of organic peroxides include tert-butyl hydroperoxide, tert-butyl peroxyacetate and di-tert butyl peroxide.

The oxygen containing compound can be an organic epoxide. The organic epoxides have the general formula 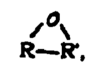 where R and R' are C₁ - C₁₂, and are the same or different and are hydrocarbyl, preferably alkyl and alkanoic. Typical epoxides include 1,2-epoxy-4-epoxy ethylcyclohexan, epoxidised methyl ester of tall oil, ethylhexylglycidyl ether.

The oxygen-containing fuel additives are employed in effective amounts to provide a homogenous motor fuel and an efficient fuel having reduced emissions. Usually, at least about 5% by volume of oxygen containing additive is employed. Further, a completely hydrocarbon-free fuel which is 100% oxygen-containing component can be employed.

The minimum amount of any of the at least four functional groups, calculated as the total volume of the compound(s) exhibiting the particular group, is not lower than 0.1%, suitably not lower than 0.5%, and preferably not lower than 1% of the total volume of the fuel composition

In general, the alcohol is preferably employed in amounts from about 0.1 to 35% by volume; the aldehyde in amounts from about 0 to 10% by volume, the ether in amounts from about 0.1 to 65% by volume, the organic ester in amounts from about 0.1 to 20% by volume, the acetal in amounts from 0 to 10% by volume, the inorganic ester in amounts from about 0 to 2% by volume, the peroxide in amounts from about 0 to 2% by volume, and the epoxide in amounts from about from about 0 to 10%, although greater and lesser amounts can be employed depending on the particular circumstances for a given motor fuel composition useful in a diesel engine.

The alcohol, or any other component of the fuel composition, may be present therein as a by-product contained in any of the other components.

The organic compounds containing bound oxygen can be derived from fossil-based sources or from renewable sources as biomass.

## Claims

1. A stable homogeneous motor fuel composition for standard diesel, gas-turbine and jet engines, having improved water tolerance and resulting in reduced emission of pollutants, comprising, by volume:
(a) from 5 % to 100 % of a component consisting of oxygen-containing organic compounds altogether exhibiting at least four different oxygen-containing functional groups, said groups being (i) an alcohol, (ii) an ether, (iii) an organic ester group, and (iv) at least one of the following: aldehyde, ketone, inorganic acid ester, acetal, epoxide, and peroxide groups, wherein said at least four groups are contributed to by at least four types of organic compounds differing in functional groups containing bound oxygen, and the minimum amount of any of said groups, calculated as the total volume of the compound(s) exhibiting the particular group, is not lower than 0.1% of the total volume of the fuel composition, said compounds being selected from:
C₁-C₁₀ alcohols and/or 2,6,8-trimethyl-4-nonanol,
aldehydes of the general formula R-CHO, wherein R is a C₁-C₈ hydrocarbon residue,
ketones of the general formula R-C(O)-R₁, wherein R and R₁ each are a C₁-C₈ hydrocarbon residue, the same or different or, together, form a cyclic ring, the total number of carbon atoms of R and R₁ being 3 to 12;
monoethers of the general formula R-O-R', wherein R and R' are the same or different and are each a C₂-C₁₀ hydrocarbon group or, together, form a cyclic ring, diethers selected from dimethoxy propane and diethoxy propane, and/or cycloethers;
esters of the general formula R-C(O)-O-R', which esters are C₁-C₈ alkyl esters of C₁-C₂₂ saturated or unsaturated fatty acids,
acetals having the general formula RCH(OR')₂ wherein R is hydrogen or hydrocarbyl, and R' is C₁-C₄ alkyl,
organic nitrates, selected from isopropyl nitrate, n-amyl nitrate, isoamyl nitrate, 2-ethylhexyl nitrate and cyclohexyl nitrate,
organic peroxides of the formula R-O-O-R' where R and R' are each the same or different, R and R' being alkyl or oxygen-substituted alkyl,
organic epoxides having the general formula 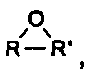 where R and R' are the same or different and are C₁-C₁₂ hydrocarbyls; and,
(b) 0 to 95 % of a hydrocarbon component,
said motor fuel composition having the following properties (i) to (vii):
(i) density at 20°C of not less than 0.775 g/cm³;
(ii) cloud temperature is not higher than 0°C at atmospheric pressure;
(iii) stable at atmospheric pressure from a cloud temperature not higher than 0°C to an initial boiling point not lower than 50°C;
(iv) amounts of liquid evaporated by boiling at atmospheric pressure include:
- not more than 25% of the total volume of the motor fuel composition distills at temperatures no higher than 100°C;
- not more than 35 % of the total volume of the motor fuel composition distills at temperatures no higher than 150°C;
- not more than 50% of the total volume of motor fuel composition distills at temperatures no higher than 200°C ;
- not less than 98% of the total volume of the motor fuel composition distills at temperatures no higher than 400°C, suitably no higher than 370°C, and preferably no higher than 280°C;
(v) heat of combustion on oxidation by oxygen of not less than 39 MJ/kg;
(vi) self-ignition temperature from 150°C to 300°C; and
(vii) ability to accommodate at least 1% water by volume.

2. The motor fuel composition of claim 1, wherein the minimum amount of any of the at least four functional groups, calculated as the total volume of the compound(s) exhibiting the particular group, is not lower than 0.5%, and preferably not lower than 1% of the total volume of the fuel composition.

3. The motor fuel composition of claim 1 or 2, wherein the at least four types of organic compounds differing in functional groups containing bound oxygen exhibit one or two functional groups each, and preferably one functional group each.

4. The motor fuel composition of any of the preceding claims, wherein one or more different compounds can exhibit the same functional group(s).

5. The motor fuel composition of any of the preceding claims, wherein the oxygen-containing organic compounds are linear or sparsely branched.

6. The motor fuel composition of any of the preceding claims, wherein the oxygen-containing component of the motor fuel composition of the invention includes all of the following: aldehyde, ketone, inorganic acid ester, acetal, epoxide, and peroxide.

7. The motor fuel composition of any of the previous claims, wherein at least one of methanol or ethanol, and optionally, by-products from the production of said methanol or ethanol is present in the oxygen-containing compound component.

8. The motor fuel composition of any of the previous claims, wherein the oxygen-containing compound component contains contaminants co-produced or present during production of said oxygen-containing compound component.

9. The motor fuel composition of any of the previous claims, which is stable at atmospheric pressure over a temperature range from a cloud temperature not higher than -35°C to an initial boiling temperature not lower than 180°C.

10. The motor fuel composition of any of the previous claims, which is stable over a range of temperatures from a cloud point not higher than -50°C to an initial boiling point not lower than 50°C.

11. The motor fuel composition of any of the previous claims, including water in amounts of at least about 1% by volume based on the total volume of the motor fuel composition.

12. The motor fuel composition of any of the previous claims, wherein the oxygen-containing organic compound component is formed from a renewable plant resource.

13. The motor fuel composition of any of the previous claims, wherein the hydrocarbon component is a diesel fraction, or a mixture of a diesel fraction and a hydrocarbon fraction lighter than the diesel fraction.

14. The motor fuel composition of any of the previous claims, wherein the hydrocarbon component is a gasoil fraction or a mixture of a gasoil fraction and a hydrocarbon fraction lighter than gasoil fraction.

15. The motor fuel composition of any of the claims 1-12, wherein the hydrocarbon component is obtained from renewable resources, including turpentine, rosin or other oxygen-containing compounds.

16. The motor fuel composition of claims 1-12, wherein the hydrocarbon component is obtained from synthesis-gas, optionally obtained from biomass; or from a C₁-C₄ gas-containing fraction; or from pyrolysis of carbonaceous materials, optionally, comprising biomass, or a mixture thereof.

17. The motor fuel composition of claims 1-16, wherein the oxygen containing components provide the required lubrication properties of the motor fuel.

18. The motor fuel composition of claims 1-17, wherein the oxygen containing components provide reduction of deposit in the combustion chamber.

19. The motor fuel composition of any of the claims 1-6 and 8-18, exhibiting a flash point of not lower than 50 °C.

20. Method of preparing the motor fuel composition of any of the preceding claims not requiring any external means for mixing, comprising successively introducing into a fuel reservoir the components of the motor fuel composition having one and the same temperature, beginning with the component having the least density at that temperature and terminating with the component having the highest density at that temperature.

## Patentansprüche

1. Stabile homogene Treibstoffzusammensetzung für Standarddieselmotoren, Gasturbinenmotoren und Düsentriebwerke, welche eine verbesserte Wassertoleranz aufweist und eine verringerte Schadstoffemission ergibt, umfassend, angegeben in Volumen:
(a) 5% bis 100% einer Komponente, welche aus sauerstoffhaltigen organischen Verbindungen besteht, die alle zusammen mindestens vier verschiedene sauerstoffhaltige funktionelle Gruppen aufweisen, die (i) ein Alkohol, (ii) ein Ether, (iii) eine organische Estergruppe und (iv) mindestens ein Mitglied der folgenden sind: Aldehyd-, Keton-, anorganische Säureester-, Acetal-, Epoxid- und Peroxidgruppen, wobei zu diesen mindestens vier Gruppen mindestens vier Arten von organischen Verbindungen beitragen, welche sich in funktionellen Gruppen unterscheiden, die gebundenen Sauerstoff enthalten, und die kleinste Menge jeder beliebigen Gruppe davon, berechnet als das Gesamtvolumen der Verbindung(en), die die jeweilige Gruppe aufweist (aufweisen), nicht weniger als 0,1 % des Gesamtvolumens der Treibstoffzusammensetzung beträgt, wobei diese Verbindungen ausgewählt sind aus:
C₁-C₁₀-Alkoholen und/oder 2,6,8-Trimethyl-4-nonanol,
Aldehyden der allgemeinen Formel, R-CHO wobei R einen C₁-C₈-Kohlenwasserstoffrest darstellt,
Ketonen der allgemeinen Formel R-C(O)-R₁, wobei R und R₁ jeweils einen C₁-C₈-Kohlenwasserstoffrest darstellen und gleich oder verschieden sind, oder zusammen einen cyclischen Ring bilden, wobei die Gesamtzahl der Kohlenstoffatome von R und R₁ 3 bis 12 ist;
Monoethern der allgemeinen Formel R-O-R', wobei R und R' gleich oder verschieden sind und jeweils ein C₂-C₁₀-Kohlenwasserstoffrest sind oder zusammen einen cyclischen Ring bilden, Diethern, ausgewählt aus Dimethoxypropan und Diethoxypropan, und/oder Cycloethern;
Estern der allgemeinen Formel R-C(O)-O-R', wobei die Ester C₁-C₈-Alkylester von gesättigten oder ungesättigten C₁-C₂₂-Fettsäuren sind,
Acetalen der allgemeinen Formel RCH(OR')₂, wobei R ein Wasserstoffatom oder einen Hydrocarbylrest darstellt und R' C₁-C₄-Alkyl ist,
organischen Nitraten, ausgewählt aus Isopropylnitrat, n-Amylnitrat, Isoamylnitrat, 2-Ethylhexylnitrat und Cyclohexylnitrat,
organischen Peroxiden der Formel R-O-O-R', wobei R und R' jeweils gleich oder verschieden sind und wobei R und R' Alkyl oder mit Sauerstoff substituiertes Alkyl sind,
organischen Epoxiden der allgemeinen Formel 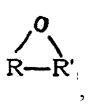 wobei R und R' gleich oder verschieden sind und C₁-C₁₂-Hydrocarbylreste darstellen; und
(b) 0 bis 95% einer Kohlenwasserstoffkomponente,
wobei die Treibstoffzusammensetzung die folgenden Eigenschaften (i) bis (vii) aufweist:
(i) eine Dichte bei 20° C von nicht weniger als 0,775 g/cm³;
(ii) der Trübungspunkt ist nicht höher als 0° C bei Luftdruck;
(iii) stabil bei Luftdruck von einem Trübungspunkt, der nicht höher als 0° C ist, bis zu einem anfänglichen Siedepunkt von nicht weniger als 50° C;
(iv) die Flüssigkeitsmengen, die durch Sieden bei Luftdruck verdampfen, schließen ein:
- nicht mehr als 25 % des Gesamtvolumens der Treibstoffzusammensetzung destilliert bei Temperaturen von nicht mehr als 100° C;
- nicht mehr als 35 % des Gesamtvolumens der Treibstoffzusammensetzung destilliert bei Temperaturen von nicht mehr als 150° C;
- nicht mehr als 50 % des Gesamtvolumens der Treibstoffzusammensetzung destilliert bei Temperaturen von nicht mehr als 200° C;
- nicht weniger als 98 % des Gesamtvolumens der Treibstoffzusammensetzung destilliert bei Temperaturen von nicht mehr als 400° C, geeigneterweise von nicht mehr als 370° C, und vorzugsweise von nicht mehr als 280° C;
(v) eine Brennwärme bei der Oxidation durch Sauerstoff von nicht weniger als 39 MJ/kg;
(vi) eine Selbstentzündungstemperatur von 150° C bis 300° C; und
(vii) die Fähigkeit zur Aufnahme von mindestens 1 Vol.% Wasser.

2. Treibstoffzusammensetzung gemäß Anspruch 1, wobei die kleinste Menge einer jeden beliebigen der mindestens vier funktionellen Gruppen, berechnet als Gesamtvolumen der Verbindung(en), welche die jeweilige Gruppe aufweist (aufweisen), nicht weniger als 0,5 %, und vorzugsweise nicht weniger als 1 % des Gesamtvolumens der Treibstoffzusammensetzung ist.

3. Treibstoffzusammensetzung gemäß Anspruch 1 oder 2, wobei die mindestens vier Arten von organischen Verbindungen, welche sich in den funktionellen Gruppen unterscheiden, die gebundenen Sauerstoff enthalten, jeweils eine oder zwei funktionelle Gruppen und vorzugsweise jeweils eine funktionelle Gruppe aufweisen.

4. Treibstoffzusammensetzung gemäß einem der vorhergehenden Ansprüche, wobei eine oder mehrere verschiedene Verbindungen die selbe(n) funktionelle(n) Gruppe(n) aufweisen können.

5. Treibstoffzusammensetzung gemäß einem der vorhergehenden Ansprüche, wobei die sauerstoffhaltigen organischen Verbindungen geradkettig oder spärlich verzweigt sind.

6. Treibstoffzusammensetzung gemäß einem der vorhergehenden Ansprüche, wobei die sauerstoffhaltige Komponente der erfindungsgemäßen Treibstoffzusammensetzung alle folgenden Mitglieder enthält: Aldehyd, Keton, anorganischer Säureester, Acetal, Epoxid und Peroxid.

7. Treibstoffzusammensetzung gemäß einem der vorhergehenden Ansprüche, wobei mindestens ein Mitglied aus Methanol oder Ethanol, und gegebenenfalls Nebenprodukten aus der Herstellung von Methanol oder Ethanol in der sauerstoffhaltigen Verbindungskomponente vorhanden ist.

8. Treibstoffzusammensetzung gemäß einem der vorhergehenden Ansprüche, wobei die sauerstoffhaltige Verbindungskomponente Verunreinigungen enthält, die während der Herstellung der sauerstoffhaltigen Verbindungskomponente als Nebenprodukt entstehen oder vorhanden sind.

9. Treibstoffzusammensetzung gemäß einem der vorhergehenden Ansprüche, welche bei Luftdruck in einem Temperaturbereich von einer Trübungstemperatur, die nicht höher als -35° C liegt, bis zu einer anfänglichen Siedetemperatur von nicht weniger als 180° C stabil ist.

10. Treibstoffzusammensetzung gemäß einem der vorhergehenden Ansprüche, welche in einem Temperaturbereich von einem Trübungspunkt, der nicht höher als -50°C ist, bis zu einem anfänglichen Siedepunkt von nicht weniger als 50° C stabil ist.

11. Treibstoffzusammensetzung gemäß einem der vorhergehenden Ansprüche, welche Wasser in Mengen von mindestens ungefähr 1 Vol.%, bezogen auf das Gesamtvolumen der Treibstoffzusammensetzung, einschließt.

12. Treibstoffzusammensetzung gemäß einem der vorhergehenden Ansprüche, wobei die sauerstoffhaltige organische Verbindungskomponente aus einem emeuerbaren Pflanzenrohstoff gebildet ist.

13. Treibstoffzusammensetzung gemäß einem der vorhergehenden Ansprüche, wobei die Kohlenwasserstoffkomponente eine Dieselfraktion oder ein Gemisch aus einer Dieselfraktion und einer Kohlenwasserstofffraktion, die leichter als die Dieselfraktion ist, ist.

14. Treibstoffzusammensetzung gemäß einem der vorhergehenden Ansprüche, wobei die Kohlenwasserstoffkomponente eine Gasölfraktion oder ein Gemisch aus einer Gasölfraktion und einer Kohlenwasserstofffraktion, die leichter als die Gasölfraktion ist, ist.

15. Treibstoffzusammensetzung gemäß einem der Ansprüche 1 bis 12, wobei die Kohlenwasserstoffkomponente aus erneuerbaren Rohstoffen, einschließlich Terpentin, Kolophonium oder anderen sauerstoffhaltigen Verbindungen, gewonnen wird.

16. Treibstoffzusammensetzung gemäß den Ansprüchen 1 bis 12, wobei die Kohlenwasserstoffkomponente aus Synthesegas, welches gegebenenfalls aus Biomasse erhalten wird; oder aus einer C₁-C₄-gasenthaltenden Fraktion; oder aus der Pyrolyse von kohlehaltigen Materialien, gegebenenfalls umfassend Biomasse, oder einem Gemisch davon, erhalten wird.

17. Treibstoffzusammensetzung gemäß den Ansprüchen 1 bis 16, wobei die sauerstoffhaltigen Komponenten die erforderlichen Schmiereigenschaften des Treibstoffes bereitstellen.

18. Treibstoffzusammensetzung gemäß den Ansprüchen 1 bis 17, wobei die sauerstoffhaltigen Komponenten zu einer Verminderung von Ablagerungen in der Brennkammer beitragen.

19. Treibstoffzusammensetzung gemäß einem der Ansprüche 1 bis 6 und 8 bis 18, welche einen Flammpunkt von nicht niedriger als 50° C aufweist.

20. Verfahren zur Herstellung der Treibstoffzusammensetzung gemäß einem der vorhergehenden Ansprüche, welches keine externen Mittel zum Mischen erfordert, umfassend aufeinanderfolgendes Einleiten der Komponenten der Treibstoffzusammensetzung, welche alle die gleiche Temperatur aufweisen, in einen Treibstoffbehälter, beginnend mit der Komponente, welche die geringste Dichte bei dieser Temperatur aufweist und endend mit der Komponente, welche die höchste Dichte bei dieser Temperatur aufweist.

## Revendications

1. Composition de carburant pour moteur homogène stable pour moteurs standards diesel, turbine à gaz et turboréacteurs, ayant une tolérance à l'eau améliorée et résultant en une émission réduite de polluants, en volume :
(a) de 5% à 100% d'un composant constitué de composés organiques contenant de l'oxygène présentant au total au moins quatre groupes fonctionnels différents contenant de l'oxygène, lesdits groupes étant (i) un alcool, (ii) un éther, (iii) un groupe ester organique, et (iv) au moins un des groupes suivants : aldéhyde, cétone, ester d'acide inorganique, acétal, époxyde et des groupes peroxydes, dans lequel lesdits au moins quatre groupes concourent à au moins quatre types de composés organiques se différenciant par des groupes fonctionnels contenant de l'oxygène lié, et la quantité minimale d'un quelconque desdits groupes, calculée comme le volume total du ou des composés présentant le groupe particulier, n'est pas inférieure à 0,1% du volume total de la composition de carburant, lesdits composés étant choisis parmi :
les alcools en C₁-C₁₀ et/ou le 2,6,8-triméthyl-4-nonanol,
les aldéhydes de formule générale R-CHO, dans laquelle R est un résidu hydrocarboné en C₁-C₈,
les cétones de formule générale R-C(O)-R₁, dans laquelle R et R₁ représentent chacun un résidu hydrocarboné en C₁-C₈, identiques ou différents ou, ensemble, forment un noyau cyclique, le nombre total d'atomes de carbone de R et R₁ étant de 3 à 12 ;
les monoéthers de formule générale R-O-R', dans laquelle R et R' sont identiques ou différents et sont chacun un groupe hydrocarboné en C₂-C₁₀ ou, ensemble, forment un noyau cyclique, les diéthers choisis parmi le diméthoxypropane et le diéthoxypropane, et/ou les cycloéthers ;
les esters de formule générale R-C(O)-O-R', lesquels esters sont des esters alkyliques en C₁-C₈ d'acides gras insaturés ou saturés en C₁-C₂₂,
les acétals ayant la formule générale RCH(OR')₂ dans laquelle R est un hydrogène ou un hydrocarbyle et R' est un alkyle en C₁-C₄,
les nitrates organiques choisis parmi le nitrate d'isopropyle, le nitrate de n-amyle, le nitrate d'isoamyle, le nitrate de 2-éthylhexyle et le nitrate de cyclohexyle,
les peroxydes organiques de formule R-O-O-R' où R et R' sont chacun identiques ou différents, R et R' étant un alkyle ou un alkyle substitué par un oxygène,
les époxydes organiques ayant la formule générale 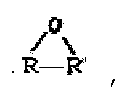 où R et R' sont identiques ou différents et sont des hydrocarbyles en C₁ - C₁₂ ; et
(b) 0 à 95% d'un composant hydrocarboné,
ladite composition de carburant pour moteur ayant les propriétés (i) à (vii) suivantes :
(i) une densité à 20°C n'étant pas inférieure à 0,775 g/cm³ ;
(ii) une température de trouble qui n'est pas supérieure à 0 °C à la pression atmosphérique ;
(iii) stable à la pression atmosphérique à partir d'une température de trouble n'étant pas supérieure à 0°C jusqu'à un point initial de distillation n'étant pas inférieur à 50°C ;
(iv) des quantités de liquide évaporé par ébullition à la pression atmosphérique comprenant :
- pas plus de 25% du volume total de la composition de carburant pour moteur distillant à des températures n'étant pas supérieures à 100°C ;
- pas plus de 35% du volume total de la composition de carburant pour moteur distillant à des températures n'étant pas supérieures à 150°C ;
- pas plus de 50% du volume total de la composition de carburant pour moteur distillant à des températures n'étant pas supérieures à 200°C ;
- pas moins de 98% du volume total de la composition de carburant pour moteur distillant à des températures n'étant pas supérieures à 400°C, de façon judicieuse pas supérieures à 370°C et de préférence pas supérieures à 280°C ;
(v) une chaleur de combustion lors d'une oxydation par oxygène n'étant pas inférieure à 39 MJ/kg ;
(vi) une température d'inflammation spontanée de 150°C à 300°C ; et
(vii) une capacité à recevoir au moins 1% d'eau en volume.

2. Composition de carburant pour moteur selon la revendication 1, dans laquelle la quantité minimale d'un quelconque parmi les au moins quatre groupes fonctionnels, calculée comme le volume total du ou des composés montrant le groupe particulier, n'est pas inférieure à 0,5%, et de préférence pas inférieure à 1% du volume total de la composition de carburant.

3. Composition de carburant pour moteur selon la revendication 1 ou 2, dans laquelle les au moins quatre types de composés organiques se différenciant par des groupes fonctionnels contenant de l'oxygène lié présentent un ou deux groupes fonctionnels chacun, et de préférence un groupe fonctionnel chacun.

4. Composition de carburant pour moteur selon l'une quelconque des revendications précédentes, dans laquelle un ou plusieurs composés différents peuvent présenter le ou les mêmes groupes fonctionnels.

5. Composition de carburant pour moteur selon l'une quelconque des revendications précédentes, dans laquelle les composés organiques contenant de l'oxygène sont linéaires ou ramifiés de façon peu dense.

6. Composition de carburant pour moteur selon l'une quelconque des revendications précédentes, dans laquelle le composant contenant de l'oxygène de la composition de carburant pour moteur de l'invention comprend la totalité des groupes suivants : aldéhyde, cétone, ester d'acide inorganique, acétal, époxyde et peroxyde.

7. Composition de carburant pour moteur selon l'une quelconque des revendications précédentes, dans laquelle au moins un parmi le méthanol ou l'éthanol, et facultativement, des produits dérivés à partir de la fabrication dudit méthanol ou éthanol est présent dans le composant à composés contenant de l'oxygène.

8. Composition de carburant pour moteur selon l'une quelconque des revendications précédentes, dans laquelle le composant à composés contenant de l'oxygène contient des contaminants coproduits ou présents lors de la fabrication dudit composant à composés contenant de l'oxygène.

9. Composition de carburant pour moteur selon l'une quelconque des revendications précédentes, qui est stable à pression atmosphérique dans une plage de températures à partir d'une température de trouble n'étant pas supérieure à -35°C jusqu'à une température initiale de distillation n'étant pas inférieure à 180°C.

10. Composition de carburant pour moteur selon l'une quelconque des revendications précédentes, qui est stable sur une plage de températures à partir d'un point de trouble n'étant pas supérieur à -50°C jusqu'à un point initial de distillation n'étant pas inférieur à 50°C.

11. Composition de carburant pour moteur selon l'une quelconque des revendications précédentes, comprenant de l'eau en des quantités d'au moins environ 1% en volume sur la base du volume total de la composition de carburant pour moteur.

12. Composition de carburant pour moteur selon l'une quelconque des revendications précédentes, dans laquelle le composant à composés organiques contenant de l'oxygène est formé à partir d'une ressource végétale renouvelable.

13. Composition de carburant pour moteur selon l'une quelconque des revendications précédentes, dans laquelle le composant hydrocarboné est une fraction de diesel, ou un mélange d'une fraction de diesel et d'une fraction hydrocarbonée plus légère que la fraction de diesel.

14. Composition de carburant pour moteur selon l'une quelconque des revendications précédentes, dans laquelle le composant hydrocarboné est une fraction de gasoil ou un mélange d'une fraction de gasoil et d'une fraction hydrocarbonée plus légère que la fraction de gasoil.

15. Composition de carburant pour moteur selon l'une quelconque des revendications 1 à 12, dans laquelle le composant hydrocarboné est obtenu à partir de ressources renouvelables, comprenant la térébenthine, la colophane ou d'autres composés contenant de l'oxygène.

16. Composition de carburant pour moteur selon les revendications 1 à 12, dans laquelle le composant hydrocarboné est obtenu à partir de gaz de synthèse, facultativement obtenu à partir de biomasse ; ou à partir d'une fraction contenant du gaz en C₁ - C₄ ; ou à partir de la pyrolyse de matières carbonées, éventuellement, comprenant de la biomasse, ou un mélange de ceux-ci.

17. Composition de carburant pour moteur selon les revendications 1 à 16, dans laquelle les composants contenant de l'oxygène apportent les propriétés de lubrification requises du carburant pour moteur.

18. Composition de carburant pour moteur selon les revendications 1 à 17, dans laquelle les composants contenant de l'oxygène apportent une réduction du dépôt dans la chambre de combustion.

19. Composition de carburant pour moteur selon l'une quelconque des revendications 1 à 6 et 8 à 18, présentant un point d'éclair n'étant pas inférieur à 50°C.

20. Procédé de préparation de la composition de carburant pour moteur selon l'une quelconque des revendications précédentes ne demandant pas des moyens externes quelconques pour mélanger, comprenant successivement l'introduction dans un réservoir de carburant des composants de la composition de carburant pour moteur ayant une seule et même température, en commençant avec le composant ayant la plus petite densité à cette température et en finissant avec le composant ayant la densité la plus élevée à cette température.
